# EUROPEAN PATENT APPLICATION

(11) **EP 4 848 683 A2**
(43) Date of publication of application: **02.12.2026**
(21) Application number: 26208578.0
(22) Date of filing: 09.05.2023
(51) Int. Cl.: H04L 41/14

(54) **DATA COLLECTION ENABLEMENT SERVICE**

(30) Priority: 09.05.2022 US 202263339692 P
(62) Document number(s) of the earlier application(s) in accordance with Art. 76 EPC: 23729563.9 / 4 523 403
(71) Applicant: IPLA Holdings Inc., New York NY 10010 (US)
(72) Inventor: LIU, Lu, Wilmington, 19809 (US); SEED, Dale, Wilmington,, 19809 (US); LY, Quang, Wilmington, 19809 (US); MLADIN, Catalina, Wilmington, 19809 (US)
(74) Representative: D Young & Co LLP

(57) **Abstract**

Methods, devices, and systems for data collection enablement services are described herein. In one aspect, a method may include receiving, by a data collection enablement service (DCES), a data collection request; determining, by the DCES, one or more data sources based at least on discovered data source profiles; receiving, from the one or more data sources and by the DCES, data according to the received request; generating, by the DCES, a dataset from the received data; storing the generated dataset in a repository in communication with the DCES; and transmitting, by the DCES, a response to the data collection request indicative of a storage location of the generated dataset.

## Description

### CROSS-REFERENCE TO RELATED APPLICATION

This application claims the benefit of U.S. Provisional Patent Application No. 63/339,692 filed May 9, 2022, entitled "Data Collection Enablement Service," the contents of which are hereby incorporated by reference herein.

### BACKGROUND

Application layer and service enablement layer data analytics require input data to be collected from various entities at different layers, such as vertical specific servers/clients, third party servers, Service Enabler Architecture Layer (SEAL), Edge Application Servers (EASs), etc. To support analytics enablement service, how these data may be collected and how to receive data from different data sources/producers to prepare the data for use in deriving analytics will need to be specified.

Currently, Network Data Analytics Function (NWDAF) and Application Data Analytics Enablement (ADAE) have defined the input data required for different types of analytics. However, in the case that the same type of data is available at multiple entities, it is not specified which exact entity that the input data may be collected from. For example, in order to perform Edge Enabler Server (EES) load analytics, data of the number of EASs registered to the EES is required. This information is available at several different entities in the EEL. Beside the EES itself, the Edge Configuration Server (ECS) that the EES registered to may also provide this information as it is included in the EES registration (and update) messages. During service provisioning, this information will also be provided to the Edge Enabler Client (EEC) by the ECS. Therefore, determining which entity (e.g., EES, ECS or EEC) may be selected as the data source to provide EES load data may depend on requirements of the data and/or preference/restriction of the data producers. How to select the optimal entity to provide the required data, how to collect data from the selected entity, and if/how the existing service enablement layer procedures may be utilized to enable data collection may be specified.

Moreover, analytical data may be collected from different layers/levels in the network, with different granularities or confidence levels. For example, to support application QoS related analytics, data may be collected from the Operations, Administration, and Management (OAM), monitoring of network quality of service (QoS) by 5GC, subscribing and receiving QoS and network analytics from NWDAF, performance data from the application server, QoS data from enablement layer client-server sessions. In another example, UE location information may be obtained from the application layer (e.g., application client (AC) profile), the service enablement layer (e.g., location information report, EEC context), and the core network (e.g., NWDAF, Access & Mobility Management Function (AMF)). It is not specified how to perform data collection in these scenarios, such as which level/layer may be selected to collect data, if/how to combine data collected from different levels/layers, etc.

In addition, the collected data required for one analytics request may be reused by other requests targeting on the same/similar data. In order to avoid repeated data collection and optimize the efficiency of the data collection process, how to manage the collected data and how to coordinate data collection requests may need to be defined.

### SUMMARY

The disclosure provided herein describes methods for enabling a data collection service to support analytics service at the 3GPP service enablement layer. A data collection enablement service (DCES) which is either standalone or a capability of ADAE, SEAL or EEL may receive a data collection request and create a data collection instance. The request may be implied in a data analytics request received by an ADAE server/client, or an explicit request for data collection generated by a service consumer in the application layer or service enablement layer.

The request may specify what data is required to be collected, required data sources, required data format, required data collection period, temporal requirements (sampling or updating rate, data freshness), quantity requirements (required number of data samples, required dataset size), quality requirement (granularity, accuracy, confidence level), storage requirement, required processing operations, targets and method for data reporting, etc.

The information of the data collection instance may be recorded in a data collection profile, which includes information in the data collection request and information identified/determined by the DCES when processing the request.

The DCES may receive data source profile associated with an entity that may generate/provide data for the data collection request, where the data source profile specifies what may be supported by the entity for data collection. The data source profile may be received via pre-provisioning or discovery procedure. The data source profile may be received before or after receiving a data collection request. The data source may be a vertical application layer entity, a service enablement layer entity (e.g., SEAL, SEALDD, EEL, NSCALE entity), a Data Collection Enablement Service (DCES) server/client, or a core network service/function (e.g., 8GC, OAM, NWDAF, Data Collection Coordination Function (DCCF)).

The data source profile may specify: supported data type (type of data that could be generated/provided), data generation schedule, data generation rate, supported data collection rate and method, data updating rate, data freshness, accessibility of data (for specific requestor or request), original source of data, capability of the data source entity (e.g. storage, data processing, communication, anonymization, distributed data collection, supported data format), etc. The data service profile may be defined for a specific entity or a type of entity.

The DCES may check dataset profiles of existing dataset(s) that may meet or partially meet the requirements in the data collection request. A dataset profile may specify: type(s) of data, address of the dataset, data sources, data collection scope (layer/level where the data is collected from), data generation time, data collection time, dataset creation time, valid period (expiration time), operations that have been applied, confidence level, accessibility (for specific requestor or request), dynamicity (whether the dataset is static/closed or dynamic/open), requests associated with the dataset, etc. The DCES may consolidate data collection requests if an existing dataset that fully meets the requirements is found. The DCES may also identify additional actions to be taken if one or more existing datasets that partially meet the requirements are found (e.g., additional data collection is required, processing operation is required to modify the dataset, combining multiple datasets, etc.).

The DCES may determine data source entities from which data may be collected based on the requirements in the data collection request, data service profiles and other information associated with the data source entities. The DCES may determine data collection scope, which type of entity could be data source, and the exact entity for data collection. The determination may consider factors such as: combining data collected from different layers/levels to increase confidence level, selecting data source entities based on their data freshness, selecting data source entities based on the communication overhead, server load, location, efficiency, etc.

The DCES may, based on the determination, collect requested data from the selected data source entities. The data collection could be done with on-demand data retrieval, subscription and notification procedure, configuring data reporting procedure, etc. When the data collection is performed in the EEL, the DCES may leverage existing EEL functionalities such as EES capability exposure, EAS discovery, EEC context information, AC information exposure, etc.

The DCES may send a distributed data collection request to enable distributed data collection where data source entities may communicate with each other directly and provide data in a cooperative manner. A distributed data collection request may specify: applicable data source entities that could support distributed and cooperative data collection, re-distribution configuration, cooperative operations, data reporting configuration, etc. Data source entities in distributed data collection could be hosted on a device that is not constantly online/on-network, or a non-3GPP device, or a device without 3GPP connectivity.

The DCES may perform processing operations on the collected data or existing datasets. The operations may be determined according to the data collection request. The operation may be to modify the existing dataset. The operation may be to merge newly collected data with existing data. The operation may be a validation procedure performed on data collected from different data sources to improve accuracy/confidence level.

The DCES may also manage the collected data. The collected data may be stored in a repository (e.g., SEALDD storage service) by creating a new dataset or updating an existing dataset (and the corresponding dataset profile).

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to features that solve any or all disadvantages noted in any part of this disclosure.

### BRIEF DESCRIPTION OF THE DRAWINGS

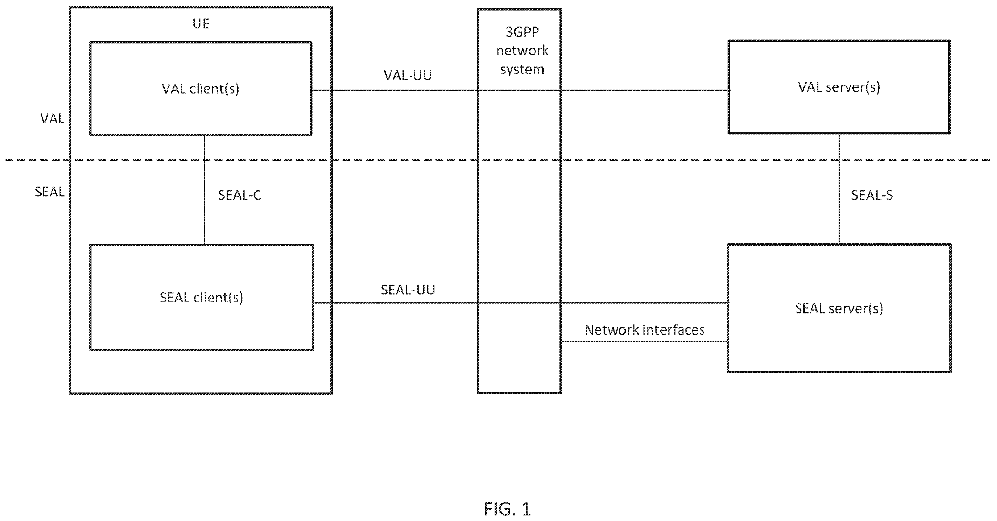

Figure 1 depicts the Service Enabler Architecture Layer for Verticals (SEAL) in the 3GPP SA6 working group;

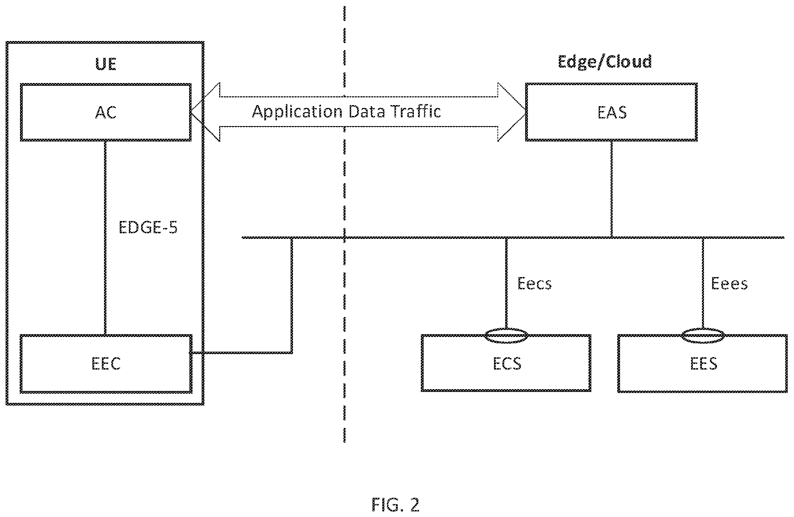

Figure 2 depicts an architecture for enabling edge applications in the 3GPP SA6 working group;
Figures 3-6 depict examples of processes for data collection enablement services;
Figure 7 depicts a graphical user interface (GUI) of a UE that may be utilized for data collection enablement services.
Figure 8A depicts an example communications system in which the methods and apparatuses described and claimed herein may be an aspect of;
Figure 8B depicts a block diagram of an example apparatus or device configured for wireless communications;
Figure 8C depicts a system diagram of an example radio access network (RAN) and core network;
Figure 8D depicts a system diagram of another example RAN and core network;
Figure 8E depicts a system diagram of another example RAN and core network;
Figure 8F depicts a block diagram of an example computing system; and
Figure 8G depicts a block diagram of another example communications system.

### DETAILED DESCRIPTION OF ILLUSTRATIVE EMBODIMENTS

3GPP SA2 defines data collection coordination function (DCCF) to coordinate the collection of data requested by NF consumers (TS 23.288). It may prevent data sources from having to handle multiple subscriptions for the same data and send multiple notifications containing the same information due to uncoordinated requests from data consumers. DCCF is applicable to NWDAFs that request data from a data source, NF consumers that request analytics from an NWDAF data source, NF consumers that request data from an ADRF data source, and ADARFs that receive data from an NF data source.

A Data Consumer may use an NRF to perform NF discovery and selection to find a DCCF that may coordinate data collection. Data Consumers send requests for data to the DCCF rather than directly to the NF Data Source. Whether the data consumers directly contact the NF Data Source or use the DCCF is based on configuration of the data consumers. For the Data Consumer and each notification endpoint in a data request, the Data Consumer may specify Formatting and Processing Instructions that determine how the data is to be provided. Upon receiving a request from a Data Consumer, the selected DCCF determines the NF instance that may be a Data Source if the Data Source is not indicated in the Data Consumer's request. The DCCF may also select an ADRF if the data is to be stored in an ADRF and an ADRF endpoint is not indicated in the Data Consumer's request.

The following functionalities/services are supported in DCCF: Data formatting and processing; historical data handling; data collection from NFs, OAM; correlation between network data and service data; time coordination across multiple NWDAF instances; data collection with event muting mechanism; data collection from the UE application; and user consent for analytics.

3GPP SA6 (TS 23.434) defines a service enabler architecture layer (SEAL) to support vertical applications over the 3GPP system, including group management, configuration management, location management, identity management, key management, and network resource management. Particularly, the SEAL client provides the client-side functionalities corresponding to the specific SEAL service. The SEAL client(s) supports interactions with the vertical application layer (VAL) client(s). The SEAL server provides the server-side functionalities corresponding to the specific SEAL service, and supports interactions with the VAL server(s).

The following SEAL services are supported towards the vertical application layer: location management; group management; configuration management; identity management; key management; and network resource management.

3GPP SA6 (TS 23.558 [3]) defines an EEC and EES to provide edge application enabling functionalities to the AC in the UE and the EAS in the edge network. An EEC provides supporting functions needed for AC(s), including retrieval and provisioning of configuration information to enable the exchange of application data traffic with the EAS, and discovery of EASs available in the EDN.

An EES provides supporting functions needed for EASs and EECs, including: provisioning of configuration information to EECs, enabling exchange of application data traffic with EASs; supporting the functionalities of API invoker and API exposing function; interacting with 3GPP Core Network for accessing the capabilities of network functions either directly or indirectly; supporting the functionalities of application context transfer; supporting external exposure of 3GPP network and service capabilities to the EAS(s); supporting the functionalities of registration (i.e., registration, update, and de-registration) for the EEC(s) and the EAS(s); and supporting the functionalities of triggering EAS instantiation on demand.

DCES supports and coordinates analytical data collection from the application layer and service enablement layer. The service may be implemented either as a standalone capability, or as a functionality provided by ADAES, SEAL or EEL.

DCES may be implemented as a server that is hosted in the central network (DCES-central server), which may collect data from vertical application servers, service enablement layer servers, and core network functions. DCES may also be implemented as a server on the edge (DCES-edge server), which may collect data from EEL entities such as EES, EAS, and EEC. DCES may also be implemented as a client-side functionality (DCES-client) that is hosted on a UE, which may collect data from vertical application clients, service enablement layer clients, and other UE-related information that is available locally.

A data collection request could be an explicit request for collecting data from the application layer and/or service enablement layer. A data collection request may be initiated by a consumer of data collection service, or triggered by a certain event that is predefined. A data collection request may also be implied by a data analytics request sent to ADAES, where the ADAES may identify what input data is required for the analytics request and generate a data collection request accordingly. A data collection request may comprise one or more of the following information elements:

**Table 1. Data collection request information elements**

| **Information** | **Description** |
|---|---|
| Request identifier | Identifier of the data collection request. |
| Requestor identifier | Identifier of the requesting entity or service. |
| Required data | Specifies what (information type of) data is required to be collected, e.g., application performance indicator of a specific VAL user, status of EASs registered to an EES, information of a specific network slice, ACR event information, etc. |
| | Any filter information may also be specified, such as parameters and/or constrains of the data to be collected, such as a specific PLMN, a service provider, area of interest, time window of interest, reporting threshold (for subscription/notification), etc. |
| Data sources | Specifies the identifiers or addresses of data sources where the required data should be collected from. |
| | The requestor may indicate if the DCES is allowed to collect data from other data sources that are not specified here. |
| | If this information element is not specified by the requestor, then the DCES will identify/determine the data sources and add to the data collection profile. |
| Data format | Specifies the required format of the collected data. |
| Data collection period | Specifies the time interval/window during which data is collected. |
| Temporal requirement | Specifies preferences and/or requirements regarding the timing of the collected data, e.g., when the collected data is needed, required data sampling/updating rate, required data freshness, etc. |
| Quantity requirement | Specifies preferences and/or requirements regarding the quantity of the collected data, e.g., required number of data samples, required order of data samples, required size of dataset, etc. |
| Quality requirement | Specifies preferences and/or requirements regarding the quality of the collected data, e.g., preferred accuracy, required granularity of the data, required confidence level, etc. |
| Storage requirement | Specifies preferences and/or requirements regarding the storage of the collected data, e.g., how long the data should be stored, required storage space to allocate for data storage, etc. It may also include an identifier/address of a data repository or an existing dataset to store the collected data. |
| Processing operation | Specifies data processing operations that need to be performed on the collected data, such as normalization, rounding, clean-up, aggregation, validation, data alignment, and other operations that may prepare the data for analytics purpose. |
| Reporting targets | Identifiers or endpoint addresses of where the collected data should be sent to. The reporting target may be different from the requestor. |
| Reporting method | Specifies if the collected data should be reported to the reporting target as a one-time response (report after all required data has been collected) or real-time updates (report as the data is being collected). |
| | In addition, specifies how long the requestor may wait for the collected data, which may assist with the data collection decision. For example, if the requestor needs the data immediately, then the DCES may be limited to check for the availability of existing dataset in a repository. |

The data collection request may specify all the information needed for the DCES to determine where and how to collect data. Alternatively, the request may not specify all the information, in which case the DCES may help determine where and how to collect the data. The data collection request may also be defined as a list of criteria based on the parameters present in the data source profiles.

Data collection profile may be generated by the DCES based on the received data collection request, which specifies what data needs to be collected and how the data may be collected in the corresponding data collection task/instance. The data collection profile may include information elements defined in the data collection request, as well as new information that is identified/determined by the DCES when processing the data collection request (section 5.2.1). In addition to the information elements in Table 1, a data collection profile may comprise one or more of the following information elements:

**Table 2. Data collection profile information elements**

| **Information** | **Description** |
|---|---|
| Data collection identifier | Identifier of the data collection task/instance. |
| Associated requests | Identifiers of the one or more data collection requests associated with this data collection instance. |
| Associated datasets | Identifiers of the existing datasets that are related to this data collection instance, such as the datasets identified by the DCES which may fully or partially meet the requirements of the data collection request. |
| Data sources | Identifiers of the data source entities (e.g., data producers) where the required data should be collected. The data source entities are either specified in the data collection request or identified/determined by the DCES. |
| Data source properties | Properties of the data sources that are identified by the DCES, such as the scope/level or the type of the data source entities. |
| Collection methods | Specifies data collection method associated with each data source entity, such as on-time retrieval, subscription, data reporting, etc. |
| Processing operations | Specifies data processing operations that need to be performed on the collected data, including both the operations defined in the data collection request, and any additional processing operations that are determined by the DCES, such as modifying existing datasets, aligning newly collected data with existing dataset, etc. |
| Distributed collection configuration | Specifies if distributed data collection is enabled for this data collection instance and the corresponding configuration information (as defined in the distributed data collection request). |
| Generated datasets | Identifiers and/or addresses of the dataset(s) that are generated as the result of this data collection instance. |

Data source (e.g., data producer) is an entity that is capable of generating or providing data required by the data collection service for a data collection request. A data source entity may be a vertical application layer entity, such as a VAL server or client. Data provided by a VAL entity may include application related data, such as VAL user information, performance indicators and measurements, application server status and load, application session status and load, etc. A data source entity may be a service enablement layer entity, such as a SEAL server/client, SEALDD server/client, EES/EEC, NSCALE server/client, CAPIF entities. As data sources, service enablement layer entities may provide data related to service enablement layer event information, service availability and performance, enablement layer server status, etc. A DCES entity may also act as a data source to support hierarchical or distributed data collection and assist the data collection process from the original data sources. For example, a DCES-edge server co-located with an EES may assist the data collection process at the edge and act as a data source to send the collected data back to a DCES-central server. DCES-clients hosted on UEs may assist local data collections and cooperate in distributed data collection. A data source entity may be a core network service/function, such as OAM, DCCF, NWDAF. Hierarchical data collection may be supported where DCCF or NWDAF may collect data from other entities and then expose the collected data (or analytics) to DCES in the enablement layer as data source.

Data source profile (e.g., data producer profile) may be defined for a data source entity to specify what data may be provided and what may be supported for data collection, such as the availability and accessibility of the data generated/produced by the entity. If a data source entity may provide multiple types of data, the entity may choose to either define a common data source profile for all types of data or define a specific profile for each type of data. In the data source profile, the following information could be specified:

**Table 3. Data source profile**

| **Information** | **Description** |
|---|---|
| Data source identifier | An identifier of the data source entity. |
| Supported data | Describes what (information type of) data may be generated/provided by this data source entity, e.g., compute resource usage at a specific server, connection bandwidth for a specific session, number of active sessions in a specific EDN, etc. |
| | Supported data could be a single type of data if only one type of data is supported for data collection at this data source entity, or the data source entity prefers to use individual profile for each type of supported data. |
| | Supported data could also be a list of different types of data if the data source entity prefers to use a common profile for multiple types of supported data. If the supported data is a list, the other entries in the data source profile may also be lists. |
| Data generation schedule | Describes the data source entity's schedule of generating data, such as when the data source is active to produce data, when the data will be available for collection. |
| | For example, the data may be generated at the end of the day, data generation is paused during server maintenance, etc. |
| | Data generation schedule could be the same as the schedule of the data source entity. Alternatively, the data source entity may define a specific schedule for data collection purpose. |
| Data generation rate | Describes the data generation rate at the data source entity. |
| | For example, a server may conduct certain performance measurement every hour or every day. Correspondingly, data generating rate will be hourly/daily. |
| Supported collection rate | Describes the supported data collection rate, such as sampling rate. |
| | In order to avoid excessive accesses, the data source entity may limit the data collection or sampling rate. For example, a data source entity may set the supported collection rate to once per day, even when the entity is constantly generating new data (e.g., data generation rate is hourly). |
| | Generally, the supported collection rate will not exceed data generating rate. If not specified, the supported collection rate is the same as data generation rate. |
| Supported collection method | Describes the supported data collection method, such as whether data retrieval/subscription/reporting is supported, whether data collection may be on-network or off-network (off-network supports distributed data collection and may require relay support); whether direct/indirect data collection from the DCES is allowed, whether it may relay data collected from other entities, etc. |
| Data updating rate | Describes how frequently the data will be updated at the data source. |
| | This parameter may apply to scenarios with indirect/hierarchical data collection where this data source entity is not the original generator of the data. For example, data collection service may collect EES-related data from the ECS, where the ECS receives regular updates from the EES. |
| | If not specified, data updating rate is the same as the data generation rate. |
| Data storage option | Describes the storage capability of the data source, such as whether collected data may be stored by the data source entity (in a repository), how long the data may be stored, etc. |
| Data freshness | Describes the freshness of data provided by the data source. The freshness may be defined based on the length of time elapsed after the data is generated or made available at the data source entity. In addition, the freshness may indicate the age of the data, e.g., a week old, a month old, etc. and may indicate the storage capability of the data source. |
| | This parameter may apply to the scenario where the data may not be immediately available after it is generated, or the collected data is temporarily stored at the data source before sending to the DCES, or this data source entity is not the original generator of the data. |
| | For example, the freshness of EES-related data at the ECS is determined by when the ECS receives the latest update from the EES. |
| Data accuracy | Specifies the accuracy of data provided by this data source. |
| Anonymization option | Specifies if the data collected from this data source entity will be anonymized before sending to the DCES, or whether the collected data needs to be anonymized by the DCES before used elsewhere. |
| Accessibility | Describes if the data is allowed to be collected for a specific request or requestor. For example, the data source entity may specify that the data may only be collected for service enablement layer request/requestor, or the data may only be collected for analytics service associated with a specific application, etc. |
| Original source | Specifies the original source of the data provided by this data source entity. If this data source entity provides data that is not locally generated, it may specify the original data generator. |
| Data processing capabilities | Describes the capabilities of the data source to provide additional processing functionality such as aggregation, data validation, etc. |
| Communication capabilities | Describes the capabilities or constraints of the data source to communicate the data. For example, communications as a data source may be geographically constrained or limited to a certain access technology, even if other communications are not. |
| | Alternatively, a communication schedule or a specific access technology may be associated with the data source. |
| Supported data format | Specifies the supported format of data generated at this data source entities. For example, some data sources may be able to generate/provide data as a function of time, others as a function of location, etc. |
| Data collection role | Describes the roles the data source may have within the system, e.g., as a repository, as a distributed data collection request initiator, as a distributed data collection request receiver, or both. |

A data source profile may be defined for a specific entity or a type of entity. For example, an EAS may define a data source profile to support data collection from this EAS. The data source profile may be standalone or part of the EAS profile. If multiple EASs registered to the same EES share the same characteristics for supporting data collection, a common data source profile for all these EASs may be defined and maintained at the EES.

The data source profile may include information that is specifically used for data collection purpose. General information of an entity that is not included in the data source profile may also be used by the DCES for data collection purpose. For example, an EAS may not specify data generation schedule in the data source profile, but the schedule information in its EAS profile may indicate when the EAS is available for generating data. EAS service area information in the EAS profile may also be used by DCES when determining if data should be collected from a specific EAS for a location-based data collection request.

The collected data may be stored in a data repository, which could be a storage service provided by DCES itself or other service enablement layer functionalities (e.g., a SEALDD storage service or ADRF). The collected data may be managed as datasets, where the property of a dataset is described by a dataset profile. The following information could be specified in a dataset profile:

**Table 5. Dataset profile**

| **Information** | **Description** |
|---|---|
| Dataset identifier | An identifier of the dataset. |
| Dataset description | Describes what (type of) data is included in the dataset. For example, UE location, EES load, etc. |
| | A dataset may contain one or more types of data. |
| Dataset address | Describes where the dataset is located at, such as the identifier of the data repository that stores this dataset. |
| Data sources | Describes the data source(s) from which data in this dataset is collected or generated. Both direct data source and original data source may be included. |
| Data collection scope | Describes the scope or level of the data, such as application-level (data collected from VAL servers/clients), service-level (data collected from service enablement layer such as EES, SEAL server, CAPIF, etc.), system-level (data collected from 8GC, OAM, etc.), etc. The data collection scope may also be indicated by the data sources. |
| Storage requirement | Specifies preferences for storing this dataset, e.g., how long to store, whether data is anonymized, maximum size to allocate for data storage, etc. |
| Data generation time | Describes when the data in this dataset is originally generated, which could be a timestamp, a list of timestamps, or a time window. |
| Data collection time | Describes when the data in this dataset is collected, which could be a timestamp, a list of timestamps, or a time window. |
| Dataset creation time | Describes when the dataset is created. |
| Valid period | Specifies the valid period or expiration time of the data in this dataset. |
| Processing operation | Describes what processing operation(s) have been applied to this dataset. For example, data has been cleaned-up to remove invalid samples, data has been validated across multiple sources, data has been normalized, data has been anonymized, etc. |
| Confidence level | Describes the confidence level or accuracy of the data in this dataset. |
| Accessibility | Specifies if the dataset is allowed to be accessed for a specific request or requestor. For example, the dataset may only be accessed by a service enablement layer entity, the dataset may only be used for analytics service associated with a specific application, etc. |
| Dynamicity | Indicates if the dataset is static or dynamic. A static dataset is a closed dataset that will not be constantly updated. A dynamic dataset is an open dataset that will be constantly updated (e.g., new data is added periodically), which may be associated with real-time or continuous data collection. |
| Associated request | A list of identifiers of data collection requests that are associated with this dataset. |
| | This information may be used for consolidating requests that are targeting on the same data. |

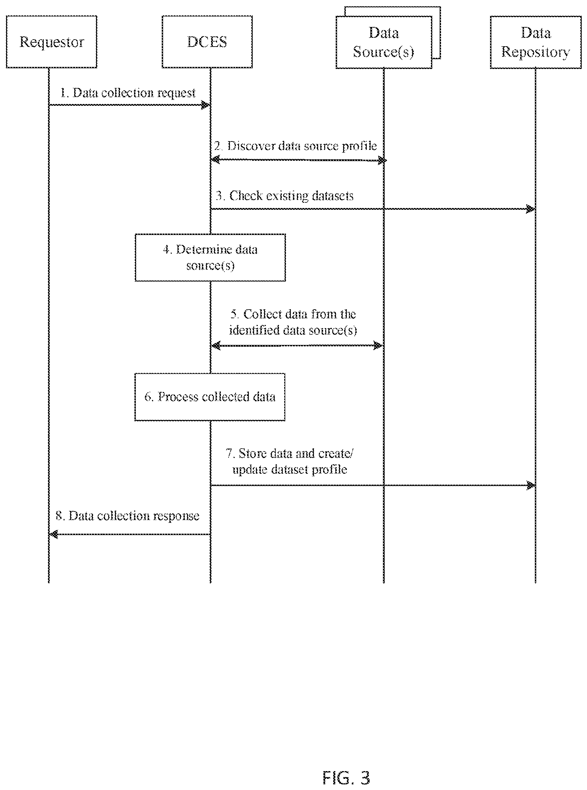

Figure 3 shows the common procedure of a data collection service. The steps may be performed in the sequence shown or in different sequences than shown in Figure 3.

**Step 1**: A DCES may receive a data collection request. The request could be implied by a data analytics request sent to ADAES. The request could also be an explicit request for collecting data from the application layer and/or service enablement layer. The DCES may create a data collection instance for the received request and generate a data collection profile to record information of this instance.

**Step 2**: The DCES may discover (or is provisioned with) data source profiles (e.g., data producer profiles) associated with the entities (e.g., data producers) that may potentially provide the required data. This step may be performed before or after receiving a data collection request (step 1). DCES may store the discovered data source profiles for determining and selecting data sources for data collection requests. If a data collection request identifies a data source whose profile is not available at the DCES, the DCES may send a request to the corresponding entity to retrieve the data source profile.

**Step 3**: The DCES may check the data repository or data sources with a "repository" role for existing dataset(s) that may meet or partially meet the requirements of the data collection request. The identified dataset(s) may be added to the "Associated datasets" entry in the data collection profile.

If a static dataset that meets the requirements is found, the DCES may not conduct further data collection (e.g., proceed to Step 8).

If a dynamic dataset that meets the requirements is found, the DCES may consolidate the data collection request with the existing request(s) that are associated with the dataset by updating the "associated request" parameter in the dataset profile (e.g., proceed to Step 7).

If a dataset that partially meets the requirements is found, the DCES may take actions regarding the unmet requirements. For example, if the data collection request requires both EAS and EES data and the existing dataset only contains EAS data, the DCES may further conduct data collection from EES. If the request requires high-confidence level data and the existing dataset contains data collected from the core network with a confidence level lower than the requirement, the DCES may further conduct application layer and/or service enablement layer data collection to improve the confidence level. If a dataset is found that contains data collected throughout a time window longer than the required collection period defined in the request, the DCES may process the dataset (e.g., by segmenting) to obtain the required segment of data.

If multiple datasets that partially meet the requirements are found, the DCES may aggregate/consolidate the separate datasets to satisfy the data collection requirements. If the aggregated/consolidated dataset still may not fully meet the requirements, the DCES may take actions regarding the unmet requirements, as described above.

**Step 4**: The DCES may determine data source(s) for data collection and may add the information to the "Data sources" and "Data source properties" entries in the data collection profile. The selection of data source(s) may be based on matching data source profile with the requirements defined in the request, including the following aspects:

Determining data collection scope. Whether data may be collected from the application layer, the service enablement layer, the core network, or jointly across multiple layers, is determined based on what data is required as well as the required accuracy, granularity, or confidence level. When a high accuracy is required, data may be collected from multiple sources located at different layers to increase the confidence level. For example, application QoS related data may be collected from the OAM, 8GC (monitoring of network QoS), NWDAF (subscribing and receiving QoS and network analytics), application server, service enablement layer sessions, etc. In another example, UE location information may be obtained from the application layer (e.g., AC profile), the service enablement layer (e.g., location information report, EEC context), and the core network (e.g., NWDAF, AMF). Collecting data from multiple sources in different scopes/layers may provide higher accuracy or confidence level.

Determining the type of entity that may be a data source. The type of entity from which to collect data may be determined based on the specific requirements in the data collection request. For example, if the required data is related to a specific application server, then the corresponding application server and/or service enablement layer servers that are providing services to the application server may be identified as data sources. If the required data is related to EDN status, then the ECS and EES(s) in the EDN may be identified as data collection sources.

Determining a specific entity as the data source. The data source entity may be determined if the data collection request has specified the identifier of the target data source, such as a specific VAL user ID or an identifier of a specific server/client. In the case that the data source entity is not specified, or there are multiple entities capable of providing the required data, the DCES may select the data source entity based on the data source profile and other information associated with the entities. For example, EES load data (e.g., the number of EASs registered to the EES) may be available at the EES (in EES profile), the ECS that the EES registered to (through EES registration and update) and EEC(s) that have registered to the EES (provided by ECS to EEC during service provisioning). Although the same data may be provided by different entities, the freshness of data might be different (e.g., EES load data at the EES itself may be the most up-to-date). If data freshness or real-timeliness is required, then the EES may be selected as the data source. Otherwise, the ECS may be selected as data source to avoid introducing additional load to the EES, or an EEC could be selected as the data source if the data collection request is generated locally at the UE.

**Step 5**: The DCES may collect data from the identified data source(s). Depending on the capabilities of the data source entities (as defined in the data source profile), the DCES may determine the collection method and may add to the "Collection methods" entry in the data collection profile. The collection may be done with a data retrieval request, subscription request, or configuring a data reporting procedure and the request may include information as indicated in Table 1.

On-demand data retrieval: The DCES may send a retrieval request to the data source entity to collect the requested data. In the retrieval request, the DCES may specify what data is requested as well as other requirements of the data.

Subscription and notification: The DCES may send a subscription request to the data source to receive notifications as collected data. In the subscription request, the DCES may specify the notification criteria based on the requested data and requirements.

Data reporting: The DCES may configure the data source entity for reporting data. The configuration may specify what data is requested, when the data source entity should send data to DCES (trigger criteria), the frequency of data reporting, etc.

**Step 6**: The DCES may process the collected data or the existing dataset(s) identified in Step 3, and may add the processing operations to the "Processing operations" entry in the data collection profile. The processing may include one or more of the following.

Data processing may be applied according to the "processing operation" defined in the data collection request.

In the case where an existing dataset that partially meets the requirements is found, the DCES may modify/tailor the dataset to fully meet the requirements.

In the case where an existing dataset that partially meets the requirements is found and DCES further conducted data collection to fully meet the requirements, the DCES may combine the newly collected data with the existing data and apply operations such as aligning data samples according to timestamps, converting or transforming data into the same format or granularity, up-sampling or down-sampling, normalizing, etc.

In the case where the same data is collected from multiple sources (across multiple layers), validation/calibration may be applied. For example, the DCES may remove data samples that are inconsistent across different sources, and keep data samples that achieve consensus across all sources to ensure high level of confidence.

**Step 7**: The DCES may store the data in a repository (e.g., a SEALDD storage server) as indicated in the data collection request by creating a new dataset or updating an existing dataset, and creates/updates the corresponding dataset profile.

**Step 8**: The DCES may send a response to the requestor or to the reporting target specified in the data collection request. The response may include the address of the dataset in the repository and/or the profile of the dataset.

When collecting data from the EEL, the DCES may interact with the EEL entities by utilizing reference points defined in EEL. The DCES may be implemented as an entity in a centralized manner in the cloud, in a distributed manner at the edge, or a combination thereof.

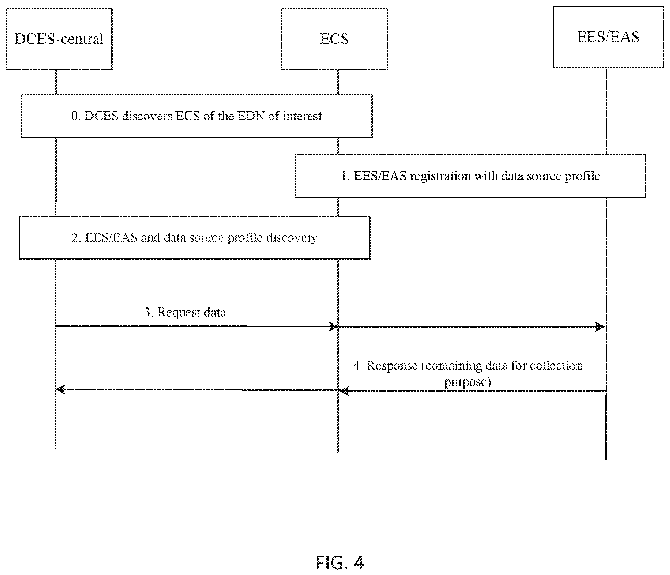

If the DCES is deployed in a central server (DCES-central server), the DCES may interact with the ECS to collect data from the EEL/EDN, as shown in Figure 4.

**Step 0**: The DCES-central server may discover the ECS associated with the EDN of interest.

**Step 1a**: An EES may register to the ECS. During registration, the EES may provide its EES profile and data source profile to the ECS, indicating if/what data collection is supported.

**Step 1b**: An EAS may register to the EES. During registration, the EAS may provide its EAS profile and data source profile to the EES, indicating if/what data collection is supported. The EES may further provide the data source profiles of registered EASs to the ECS, either by sending the EAS data source profiles separately to the ECS, or integrating the EAS data source profiles into the EES data source profile and sending to the ECS.

**Step 2**: The DCES-central server may discover the EES/EAS of interest from the ECS, which may include the discovery of the data source profile. Since the ECS maintains the registration information of EESs (EES profile) in the network, and EES registration information may further contain the list of EASs registered to the EES, the DCES-central server may be able to identify the required EES/EAS for data collection based on this information. The DCES-central server may further discover the data source profiles of the EES/EAS.

**Step 3**: Once the EES/EAS has been identified for data collection, the DCES-central server may request data from the target EES/EAS either directly or through the ECS. For example, the DCES may send a subscription request to the ECS, which is then forwarded to the corresponding EES/EAS. Alternatively, the DCES-central may collect EES/EAS data that the ECS maintains for the EES/EAS (e.g., EES/EAS profile).

**Step 4**: The requested data may be provided to the DCES-central server either directly or through the ECS. For example, a notification message containing data to be collected may be sent to the ECS and then forwarded to the DCES.

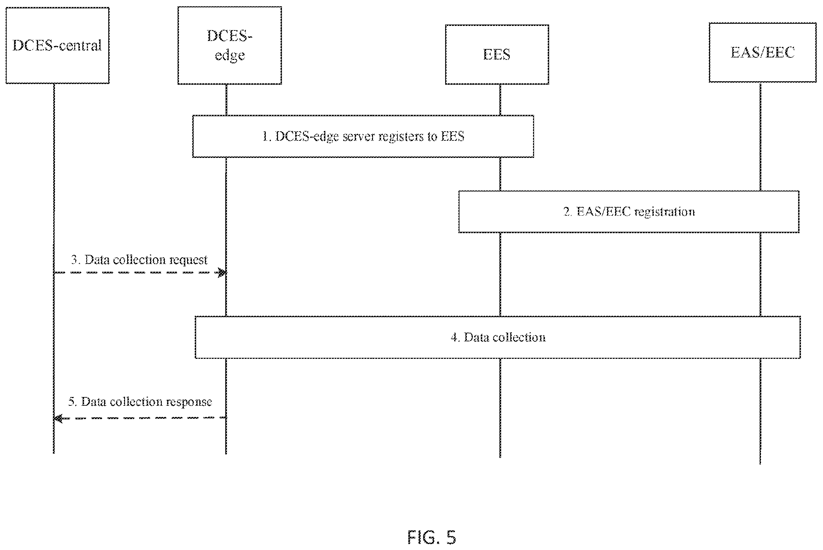

The DCES may also be deployed at the edge (DCES-edge server), e.g., as a standalone function in an EDN, as an EAS or as a function embedded in an existing EDN function such as an EES. The DCES-edge server may interact with the EES with procedures defined between EES and EAS to collect data locally. The DCES-edge server may further send the collected data to the DCES-central server, where the latter may consolidate the data collected by multiple DCES-edge servers, as shown in Figure 5.

**Step 1**: The DCES-edge server may register to an EES with a registration procedure. Alternatively, the DCES-edge server may communicate with the EES through different types of messages than registration (e.g., DCES-edge server may subscribe to EES or issue discovery requests to EES). The DCES-edge server may send the information of the EES to the DCES-central server.

**Step 2a**: An EAS may register to the EES. During registration, the EAS may provide its EAS profile and data source profile to the EES, indicating if/what data collection is supported.

**Step 2b**: An EEC may register to the EES. During registration, the EEC may provide its EEC profile and data source profile to the EES, indicating if/what data collection is supported. The EEC may further provide the data source profiles of registered ACs to the EES, either by sending the AC data source profiles separately to the EES, or integrating the AC data source profiles into the EEC data source profile and sending to the EES.

**Step 3**: The DCES-central server may distribute the data collection request to one or more DCES-edge servers. The DCES-central server may distribute the request based on the information about the EES that was obtained from the DCES-edge server in step 1.

**Step 4**: The DCES may collects data from the entity of interest. In some cases, a EES may be a data source. Data collection from EES may leverage EES capability exposure APIs where EES information may be provided to the EAS/DCES-edge server.

In some cases, an EAS may be a data source. Data collection from the EAS may leverage EAS discovery APIs provided by the EES, which enables DCES-edge server to obtain information about the EASs (EAS profiles), such as EAS status, performance indicators, etc. In the discovery request, the DCES-edge server may specify the discovery filter according to the requirements defined in the data collection request. Alternatively, the DCES-edge server may communicate with the EES through different types of messages (e.g., DCES-edge server may subscribe to EES).

In some cases, an EEC may be a data source. Data collection from the EEC may be achieved by requesting EEC registration information (EEC context) from the EES.

In some cases, an AC may be a data source. Data collection from the AC may leverage AC information exposure API to obtain information of AC(s) from the EES. For example, the DCES-edge server may subscribe to AC information and specify the subscription filter according to the data collection requirements.

**Step 5**: The DCES-edge server may send a response to the DCES-central server with the collected data.

A procedure for distributed data collection is described herein. In distributed data collection, multiple data source entities may cooperate with each other to complete the data collection request. For example, data may be collected from data sources hosted by UEs that are not constantly on-network or in a particular area. An off-network entity may still generate and provide data to DCES by forwarding the generated data to another data source entity that is on-network. To support distributed data collection, the DCES may configure distribution and cooperation operations among the data source entities.

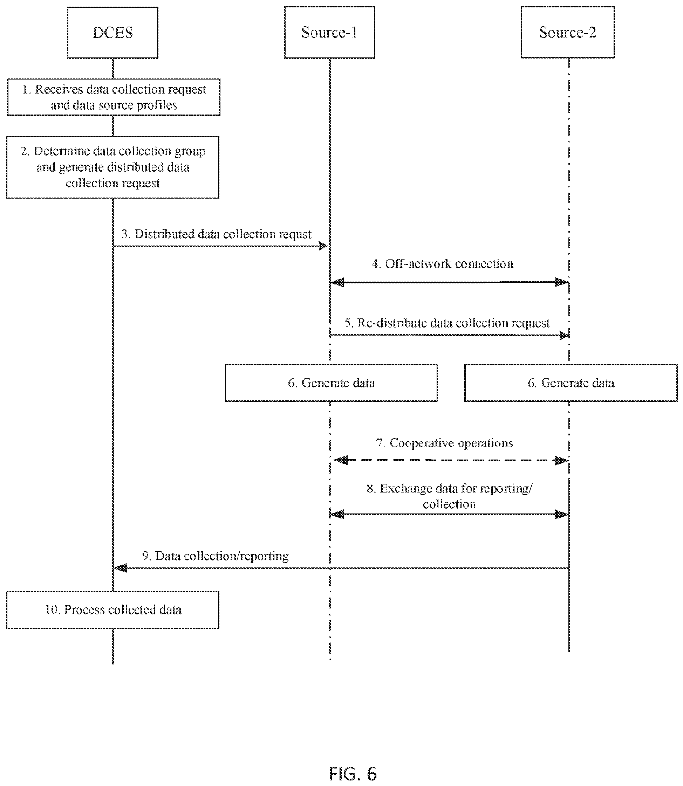

Distributed DCES entities (e.g., DCES client on UE) may assist the data collection process in these scenarios. For example, DCES clients hosted on UEs may assist their co-located original data sources in distributed data collection by redistributing/forwarding the collection request and/or relaying the data collected at the other UEs. An example is shown in Figure 6 where Data Source 1 and Data Source 2 may be associated with two UEs respectively. Each of Data Source 1 and 2 may be an original data source entity that supports distributed data collection functionalities, or a DCES client that helps collecting data from the original data source and reporting to the DCES server/client in higher hierarchy as a data source.

**Step 1**: The DCES may receive a data collection request and data source profiles, (e.g., similar to Steps 1 and 2 of Figure 3).

**Step 2**: The DCES may select data sources for the data collection request and determines that distributed data collection is needed. The determination may be based on examining the data source profiles and other information of the selected data source entities. For example, the DCES may identify that Data Source 1 and Data Source 2 are co-located, capable of connecting with each other off-network, and their data generating schedule complement each other. A group of data sources may be defined as a data collection group and the DCES may determine individual data collection request for each data source entity in the group. The data collection group may be defined based on data source profiles and other information associated with the data source entities and their hosting UEs, such as UEs in a certain geographical area at a given time, existing preconfigured group ID, a specific broadcast/multicast group, UE capabilities, UEs communicating with a specific VAL Server, UEs in an EDN, etc.

**Step 3**: The DCES may distribute data collection request to the data sources in the group by sending a distributed data collection request to some/all entities in the group. The request may include information about the data collection group, e.g., group id. When distributing the request to data source entities, the DCES may provide authorization to the data source entities to re-distribute the request to other data source entities (e.g., when off-network), and provide information on how they may connect to the DCES for data reporting. In addition to the information of Table 1, the following information may be included in the distributed data collection request.

Applicable data source entities: a description of applicable data source entities that are producing the same data for the collection request.

Re-distribution configuration: may indicate whether the data collection request may be re-distributed/forwarded and what entities may be used as re-distribution target. It may also include the information necessary for forwarding the request, e.g., authorization information, etc.

Cooperative operations: descriptions of operations which require direct communication between data source entities, which may involve data exchange, as well as data generation control. For example, one data source entity may trigger the other to refresh data, re-start data generation process, etc.

Reporting configuration: descriptions of distributed data reporting configurations, such as if off-network reporting is enabled, reporting method (e.g., forwarding, aggregation, etc.), how the collected data should be processed when the data source is off-line.

**Step 4**: Data Source 1 and 2 in the data collection group may connect directly. For example, Data Source 1 becomes off-line and connect with Data Source 2 off-network.

**Step 5**: Data Source 1 may identify that Data Source 2 is part of the data collection group based on the re-distribution configuration received from the DCES, and may forward the data collection request to Data Source 2.

**Step 6**: Data Source 1 and 2 may generate the necessary data for collection. If the data source is a DCES entity, the data source may collect the required data from the original data source.

**Step 7**: Optionally, data source entities may perform inter-data source communication necessary for the data collection request based on "Cooperative operations" parameters included in the distributed data collection request.

**Step 8**: Data Source 2 may connect with the DCES and is ready for reporting collected data. For example, Data Source 2 may come on-line and may act as a relay for forwarding the data collected by Data Source 1. Data Source 2 may check if Data Source 1 has unreported data to send to the DCES. If so, Data Source 2 may collect data from Data Source 1 to send it along with its report. This functionality may be determined based on the "Reporting configuration" parameters included in the distributed data collection request.

**Step 9**: Data Sources may send collected data to the DCES. This may include indirect reports from data sources, based on the Re-distribution configuration and Reporting configuration parameters. For example, Data Source 1 may provide the required data to Data Source 2 to indirectly report data to DCES, or wait until it comes on-line to directly report data to DCES.

**Step 10**: The DCES may process the collected data.

Note that the exemplary scenario is shown with Data Source 2 coming on-line first, therefore collecting data from itself and Data Source 1 and sending the data to the DCES. Many equivalent/alternative embodiments may be envisioned. For example, in some off-network deployments only certain UEs may act as relays, i.e., only certain UEs may get on and off-network. Similarly, a data source entity may be hosted on a non-3GPP device, e.g., a device that may be identified in the network but not have 3GPP connectivity. Both of these embodiments would use similar procedures.

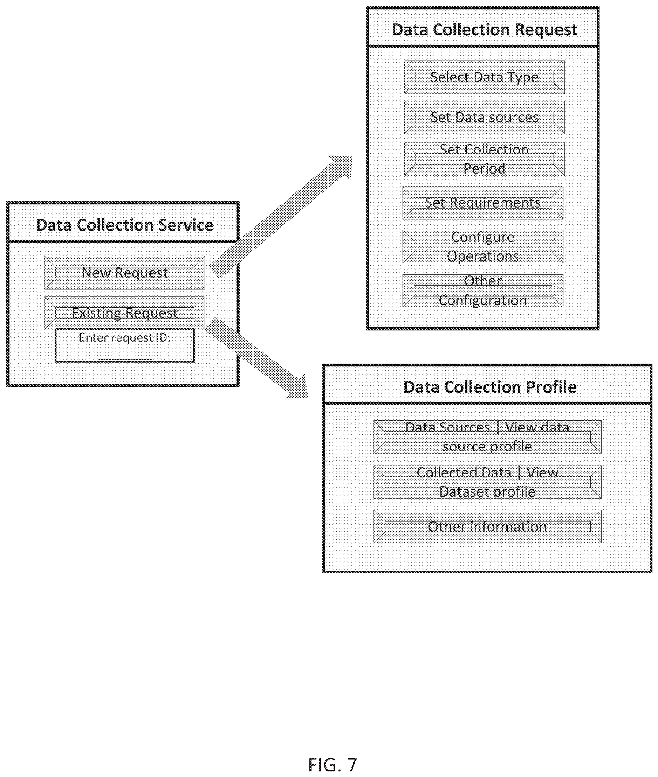

Figure 7 shows an example GUI to request data collection service and view the result (collected data). A user may request data collection request by selecting "New Request" and setting the requirements/configurations in the data collection request. A user may also check the result (collected data) of a data collection service by selecting "Existing Request" and entering request ID, where the user will be able to obtain information of the collected data (dataset profile) and other information of the data collection task/instance.

### Example Communications System

The 3rd Generation Partnership Project (3GPP) develops technical standards for cellular telecommunications network technologies, including radio access, the core transport network, and service capabilities - including work on codecs, security, and quality of service. Recent radio access technology (RAT) standards include WCDMA (commonly referred as 3G), LTE (commonly referred as 4G), LTE-Advanced standards, and New Radio (NR), which is also referred to as "8G". 3GPP NR standards development is expected to continue and include the definition of next generation radio access technology (new RAT), which is expected to include the provision of new flexible radio access below 7 GHz, and the provision of new ultra-mobile broadband radio access above 7 GHz. The flexible radio access is expected to consist of a new, non-backwards compatible radio access in new spectrum below 7 GHz, and it is expected to include different operating modes that may be multiplexed together in the same spectrum to address a broad set of 3GPP NR use cases with diverging requirements. The ultra-mobile broadband is expected to include cmWave and mmWave spectrum that will provide the opportunity for ultra-mobile broadband access for, e.g., indoor applications and hotspots. In particular, the ultra-mobile broadband is expected to share a common design framework with the flexible radio access below 7 GHz, with cmWave and mmWave specific design optimizations.

3GPP has identified a variety of use cases that NR is expected to support, resulting in a wide variety of user experience requirements for data rate, latency, and mobility. The use cases include the following general categories: enhanced mobile broadband (eMBB) ultra-reliable low-latency Communication (URLLC), massive machine type communications (mMTC), network operation (e.g., network slicing, routing, migration and interworking, energy savings), and enhanced vehicle-to-everything (eV2X) communications, which may include any of Vehicle-to-Vehicle Communication (V2V), Vehicle-to-Infrastructure Communication (V2I), Vehicle-to-Network Communication (V2N), Vehicle-to-Pedestrian Communication (V2P), and vehicle communications with other entities. Specific service and applications in these categories include, e.g., monitoring and sensor networks, device remote controlling, bi-directional remote controlling, personal cloud computing, video streaming, wireless cloud-based office, first responder connectivity, automotive ecall, disaster alerts, real-time gaming, multi-person video calls, autonomous driving, augmented reality, tactile internet, virtual reality, home automation, robotics, and aerial drones to name a few. All of these use cases and others are contemplated herein.

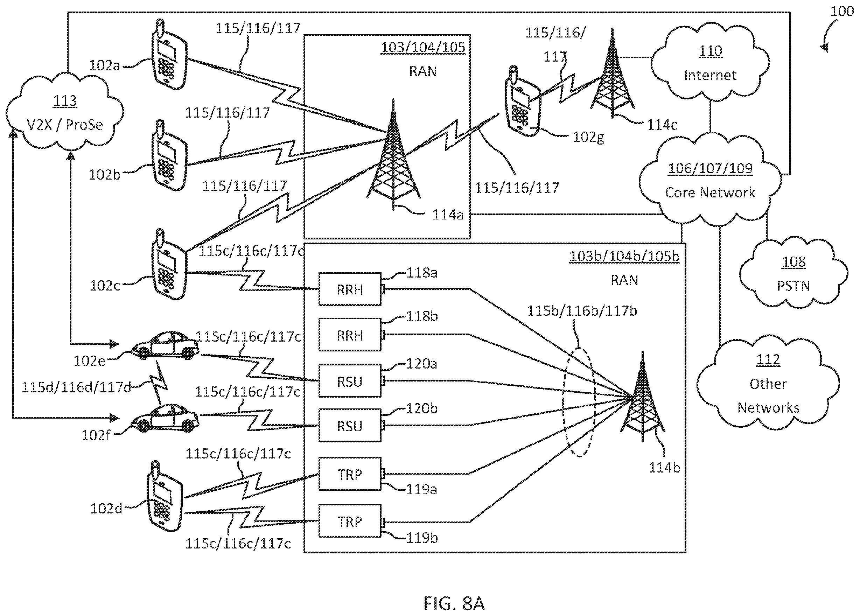

Figure 8A illustrates an example communications system 100 in which the methods and apparatuses described and claimed herein may be an aspect of. As shown, the example communications system 100 may include wireless transmit/receive units (WTRUs) 102a, 102b, 102c, 102d, 102e, 102f, and/or 102g (which generally or collectively may be referred to as WTRU 102), a radio access network (RAN) 103/104/105/103b/104b/108B, a core network 106/107/109, a public switched telephone network (PSTN) 108, the Internet 110, other networks 112, and V2X server (or ProSe function and server) 113, though it will be appreciated that the disclosed examples contemplate any number of WTRUs, base stations, networks, and/or network elements. Each of the WTRUs 102a, 102b, 102c, 102d, 102e, 102f, 102g may be any type of apparatus or device configured to operate and/or communicate in a wireless environment. Although each WTRU 102a, 102b, 102c, 102d, 102e, 102f, 102g is depicted in Figures 8A-8E as a hand-held wireless communications apparatus, it is understood that with the wide variety of use cases contemplated for 8G wireless communications, each WTRU may comprise or be embodied in any type of apparatus or device configured to transmit and/or receive wireless signals, including, by way of example only, user equipment (UE), a mobile station, a fixed or mobile subscriber unit, a pager, a cellular telephone, a personal digital assistant (PDA), a smartphone, a laptop, a tablet, a netbook, a notebook computer, a personal computer, a wireless sensor, consumer electronics, a wearable device such as a smart watch or smart clothing, a medical or eHealth device, a robot, industrial equipment, a drone, a vehicle such as a car, truck, train, or airplane, and the like.

The communications system 100 may also include a base station 114a and a base station 114b. Base stations 114a may be any type of device configured to wirelessly interface with at least one of the WTRUs 102a, 102b, 102c to facilitate access to one or more communication networks, such as the core network 106/107/109, the Internet 110, and/or the other networks 112. Base stations 114b may be any type of device configured to wiredly and/or wirelessly interface with at least one of the RRHs (Remote Radio Heads) 118a, 118b, TRPs (Transmission and Reception Points) 119a, 119b, and/or RSUs (Roadside Units) 120a and 120b to facilitate access to one or more communication networks, such as the core network 106/107/109, the Internet 110, the other networks 112, and/or V2X server (or ProSe function and server) 113. RRHs 118a, 118b may be any type of device configured to wirelessly interface with at least one of the WTRU 102c, to facilitate access to one or more communication networks, such as the core network 106/107/109, the Internet 110, and/or the other networks 112. TRPs 119a, 119b may be any type of device configured to wirelessly interface with at least one of the WTRU 102d, to facilitate access to one or more communication networks, such as the core network 106/107/109, the Internet 110, and/or the other networks 112. RSUs 120a and 120b may be any type of device configured to wirelessly interface with at least one of the WTRU 102e or 102f, to facilitate access to one or more communication networks, such as the core network 106/107/109, the Internet 110, the other networks 112, and/or V2X server (or ProSe function and server) 113. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114b may be part of the RAN 103b/104b/108B, which may also include other base stations and/or network elements (not shown), such as a base station controller (BSC), a radio network controller (RNC), relay nodes, etc. The base station 114a may be configured to transmit and/or receive wireless signals within a particular geographic region, which may be referred to as a cell (not shown). The base station 114b may be configured to transmit and/or receive wired and/or wireless signals within a particular geographic region, which may be referred to as a cell (not shown). The cell may further be divided into cell sectors. For example, the cell associated with the base station 114a may be divided into three sectors. Thus, the base station 114a may include three transceivers, e.g., one for each sector of the cell. In some cases, the base station 114a may employ multiple-input multiple output (MIMO) technology and, therefore, may utilize multiple transceivers for each sector of the cell.

The base stations 114a may communicate with one or more of the WTRUs 102a, 102b, 102c over an air interface 115/116/117, which may be any suitable wireless communication link (e.g., radio frequency (RF), microwave, infrared (IR), ultraviolet (UV), visible light, cmWave, mmWave, etc.). The air interface 115/116/117 may be established using any suitable radio access technology (RAT).

The base stations 114b may communicate with one or more of the RRHs 118a, 118b, TRPs 119a, 119b, and/or RSUs 120a and 120b, over a wired or air interface 118B/116b/117b, which may be any suitable wired (e.g., cable, optical fiber, etc.) or wireless communication link (e.g., radio frequency (RF), microwave, infrared (IR), ultraviolet (UV), visible light, cmWave, mmWave, etc.). The air interface 118B/116b/117b may be established using any suitable radio access technology (RAT).

The RRHs 118a, 118b, TRPs 119a, 119b and/or RSUs 120a, 120b, may communicate with one or more of the WTRUs 102c, 102d, 102e, 102f over an air interface 118C/116c/117c, which may be any suitable wireless communication link (e.g., radio frequency (RF), microwave, infrared (IR), ultraviolet (UV), visible light, cmWave, mmWave, etc.). The air interface 118C/116c/117c may be established using any suitable radio access technology (RAT).

The WTRUs 102a, 102b, 102c,102d, 102e, 102f, and/or 102g may communicate with one another over an air interface 118D/116d/117d (not shown in the figures), which may be any suitable wireless communication link (e.g., radio frequency (RF), microwave, infrared (IR), ultraviolet (UV), visible light, cmWave, mmWave, etc.). The air interface 118D/116d/117d may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c, or RRHs 118a, 118b,TRPs 119a, 119b and RSUs 120a, 120b, in the RAN 103b/104b/108B and the WTRUs 102c, 102d, 102e, 102f, may implement a radio technology such as Universal Mobile Telecommunications System (UMTS) Terrestrial Radio Access (UTRA), which may establish the air interface 115/116/117 or 118C/116c/117c respectively using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In some cases, the base station 114a and the WTRUs 102a, 102b, 102c, or RRHs 118a, 118b, TRPs 119a, 119b, and/or RSUs 120a, 120b, in the RAN 103b/104b/108B and the WTRUs 102c, 102d, may implement a radio technology such as Evolved UMTS Terrestrial Radio Access (E-UTRA), which may establish the air interface 115/116/117 or 118C/116c/117c respectively using Long Term Evolution (LTE) and/or LTE-Advanced (LTE-A). In the future, the air interface 115/116/117 may implement 3GPP NR technology. The LTE and LTE-A technology includes LTE D2D and V2X technologies and interface (such as Sidelink communications, etc.) The 3GPP NR technology includes NR V2X technologies and interface (such as Sidelink communications, etc.)

In some cases, the base station 114a in the RAN 103/104/105 and the WTRUs 102a, 102b, 102c, or RRHs 118a, 118b, TRPs 119a, 119b and/or RSUs 120a, 120b, in the RAN 103b/104b/108B and the WTRUs 102c, 102d, 102e, 102f may implement radio technologies such as IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114c in Figure 8A may be a wireless router, Home Node B, Home eNode B, or access point, for example, and may utilize any suitable RAT for facilitating wireless connectivity in a localized area, such as a place of business, a home, a vehicle, a campus, and the like. In some cases, the base station 114c and the WTRUs 102e, may implement a radio technology such as IEEE 802.11 to establish a wireless local area network (WLAN). In some cases, the base station 114c and the WTRUs 102d, may implement a radio technology such as IEEE 802.15 to establish a wireless personal area network (WPAN). In some cases, the base station 114c and the WTRUs 102e, may utilize a cellular-based RAT (e.g., WCDMA, CDMA2000, GSM, LTE, LTE-A, etc.) to establish a picocell or femtocell. As shown in Figure 8A, the base station 114b may have a direct connection to the Internet 110. Thus, the base station 114c may not be required to access the Internet 110 via the core network 106/107/109.

The RAN 103/104/105 and/or RAN 103b/104b/108B may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, etc., and/or perform high-level security functions, such as user authentication.

Although not shown in Figure 8A, it will be appreciated that the RAN 103/104/105 and/or RAN 103b/104b/108B and/or the core network 106/107/109 may be in direct or indirect communication with other RANs that employ the same RAT as the RAN 103/104/105 and/or RAN 103b/104b/108B or a different RAT. For example, in addition to being connected to the RAN 103/104/105 and/or RAN 103b/104b/108B, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, 102d, 102e to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 103/104/105 and/or RAN 103b/104b/108B or a different RAT.

Some or all of the WTRUs 102a, 102b, 102c, 102d in the communications system 100 may include multi-mode capabilities, e.g., the WTRUs 102a, 102b, 102c, 102d, and 102e may include multiple transceivers for communicating with different wireless networks over different wireless links. For example, the WTRU 102e shown in Figure 8A may be configured to communicate with the base station 114a, which may employ a cellular-based radio technology, and with the base station 114c, which may employ an IEEE 802 radio technology.

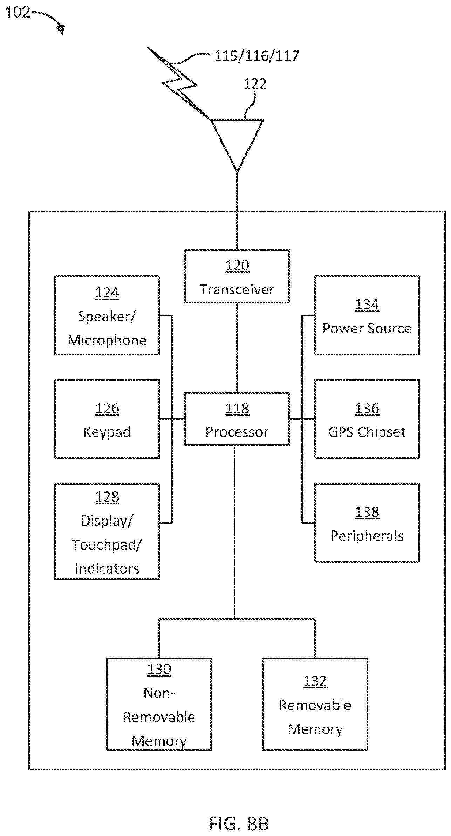

Figure 8B is a block diagram of an example apparatus or device configured for wireless communications in accordance with the aspects illustrated herein, such as for example, a WTRU 102. As shown in Figure 8B, the example WTRU 102 may include a processor 118, a transceiver 120, a transmit/receive element 122, a speaker/microphone 124, a keypad 113, a display/touchpad/indicators 128, non-removable memory 130, removable memory 132, a power source 134, a global positioning system (GPS) chipset 136, and other peripherals 138. It will be appreciated that the WTRU 102 may include any sub-combination of the foregoing elements while remaining consistent with an example. Also, in some cases the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, and proxy nodes, among others, may include some or all of the elements depicted in Figure 8B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 8B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in some cases, the transmit/receive element 122 may be an antenna configured to transmit and/or receive RF signals. In some cases, the transmit/receive element 122 may be an emitter/detector configured to transmit and/or receive IR, UV, or visible light signals, for example. In some cases, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in Figure 8B as a single element, the WTRU 102 may include any number of transmit/receive elements 122. More specifically, the WTRU 102 may employ MIMO technology. Thus, in some cases, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad/indicators 128 (e.g., a liquid crystal display (LCD) display unit or organic light-emitting diode (OLED) display unit). The processor 118 may also output user data to the speaker/microphone 124, the keypad 126, and/or the display/touchpad/indicators 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In some cases, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries, solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an aspect.

The processor 118 may further be coupled to other peripherals 138, which may include one or more software and/or hardware modules that provide additional features, functionality and/or wired or wireless connectivity. For example, the peripherals 138 may include various sensors such as an accelerometer, biometrics (e.g., finger print) sensors, an e-compass, a satellite transceiver, a digital camera (for photographs or video), a universal serial bus (USB) port or other interconnect interfaces, a vibration device, a television transceiver, a hands free headset, a Bluetooth^{®} module, a frequency modulated (FM) radio unit, a digital music player, a media player, a video game player module, an Internet browser, and the like.

The WTRU 102 may be embodied in other apparatuses or devices, such as a sensor, consumer electronics, a wearable device such as a smart watch or smart clothing, a medical or eHealth device, a robot, industrial equipment, a drone, a vehicle such as a car, truck, train, or airplane. The WTRU 102 may connect to other components, modules, or systems of such apparatuses or devices via one or more interconnect interfaces, such as an interconnect interface that may comprise one of the peripherals 138.

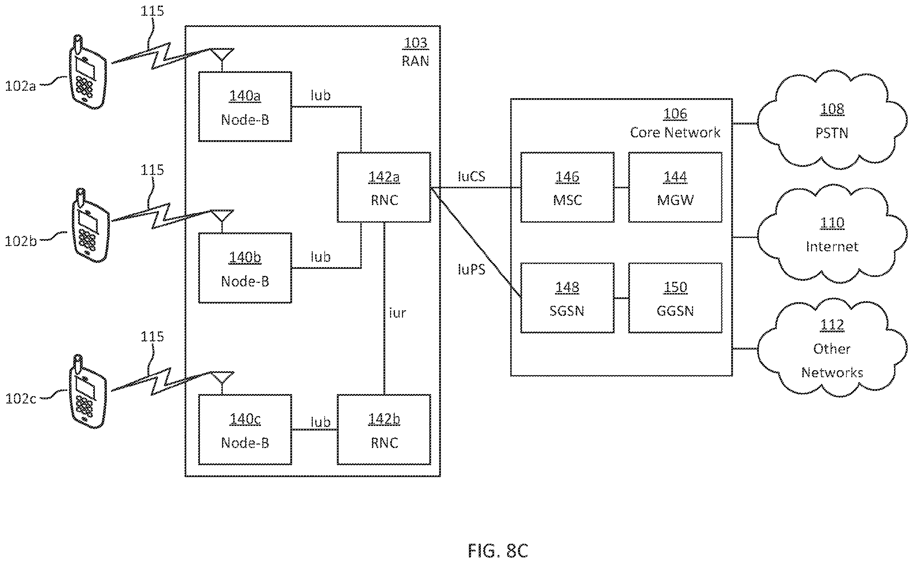

Figure 8C is a system diagram of the RAN 103 and the core network 106. As noted above, the RAN 103 may employ a UTRA radio technology to communicate with the WTRUs 102a, 102b, and 102c over the air interface 115. The RAN 103 may also be in communication with the core network 106. As shown in Figure 8C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an aspect of the disclosure.

As shown in Figure 8C, the Node-Bs 140a, 140b may be in communication with the RNC 142a. Additionally, the Node-B 140c may be in communication with the RNC 142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in Figure 8C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

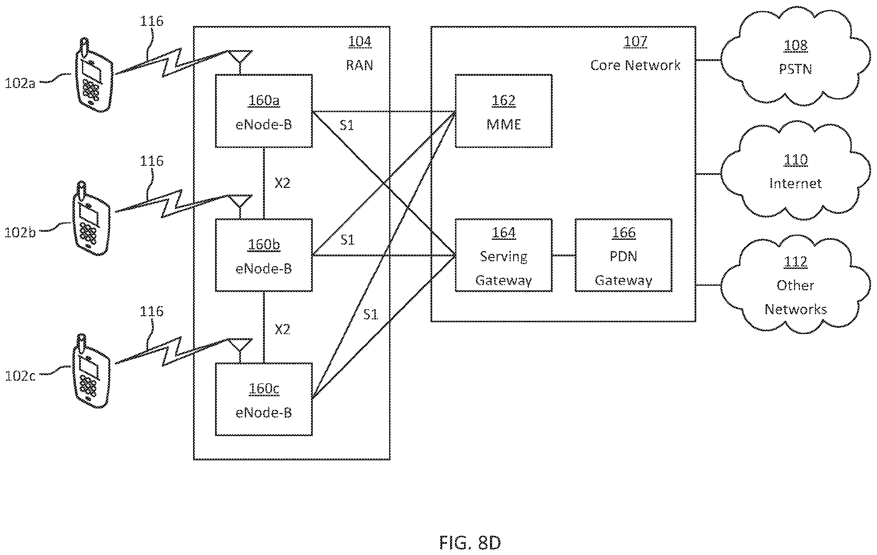

Figure 8D is a system diagram of the RAN 104 and the core network 107. As noted above, the RAN 104 may employ an E-UTRA radio technology to communicate with the WTRUs 102a, 102b, and 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an aspect of the disclosure. The eNode-Bs 160a, 160b, 160c may each include one or more transceivers for communicating with the WTRUs 102a, 102b, 102c over the air interface 116. In some cases, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink and/or downlink, and the like. As shown in Figure 8D, the eNode-Bs 160a, 160b, 160c may communicate with one another over an X2 interface.

The core network 107 shown in Figure 8D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, and 160c in the RAN 104 via the S1 interface. The serving gateway 164 may generally route and forward user data packets to/from the WTRUs 102a, 102b, 102c. The serving gateway 164 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b, 102c with access to circuit-switched networks, such as the PSTN 108, to facilitate communications between the WTRUs 102a, 102b, 102c and traditional land-line communications devices. For example, the core network 107 may include, or may communicate with, an IP gateway (e.g., an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

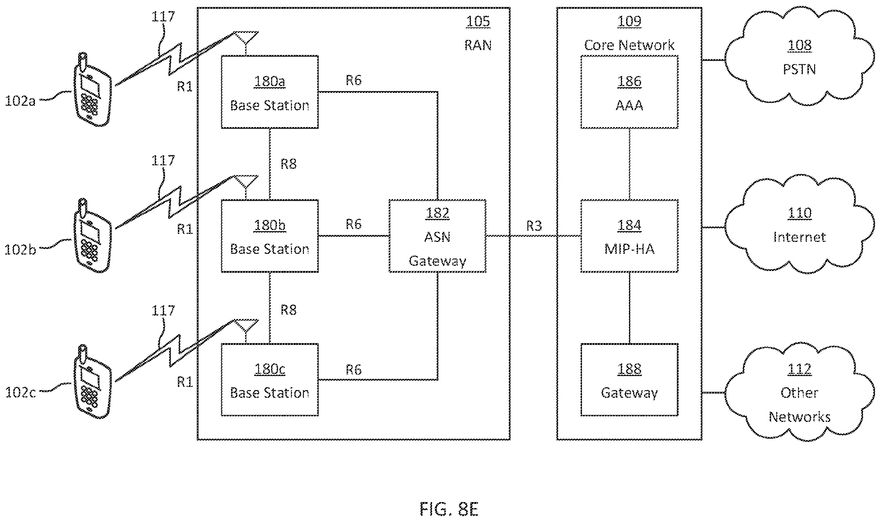

Figure 8E is a system diagram of the RAN 105 and the core network 109. The RAN 105 may be an access service network (ASN) that employs IEEE 802.16 radio technology to communicate with the WTRUs 102a, 102b, and 102c over the air interface 117. As will be further discussed below, the communication links between the different functional entities of the WTRUs 102a, 102b, 102c, the RAN 105, and the core network 109 may be defined as reference points.

As shown in Figure 8E, the RAN 105 may include base stations 180a, 180b, 180c, and an ASN gateway 182, though it will be appreciated that the RAN 105 may include any number of base stations and ASN gateways while remaining consistent with an aspect of the disclosure. The base stations 180a, 180b, 180c may each be associated with a particular cell in the RAN 105 and may include one or more transceivers for communicating with the WTRUs 102a, 102b, 102c over the air interface 117. In some cases, the base stations 180a, 180b, 180c may implement MIMO technology. Thus, the base station 180a, for example, may use multiple antennas to transmit wireless signals to, and receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, and 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, and 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in Figure 8E, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, and 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. In addition, the gateway 188 may provide the WTRUs 102a, 102b, 102c with access to the networks 112, which may include other wired or wireless networks that are owned and/or operated by other service providers.

Although not shown in Figure 8E, it will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

The core network entities described herein and illustrated in Figures 8A, 8C, 8D, and 8E are identified by the names given to those entities in certain existing 3GPP specifications, but it is understood that in the future those entities and functionalities may be identified by other names and certain entities or functions may be combined in future specifications published by 3GPP, including future 3GPP NR specifications. Thus, the particular network entities and functionalities described and illustrated in Figures 8A, 8B, 8C, 8D, and 8E are provided by way of example only, and it is understood that the subject matter disclosed and claimed herein may be embodied or implemented in any similar communication system, whether presently defined or defined in the future.

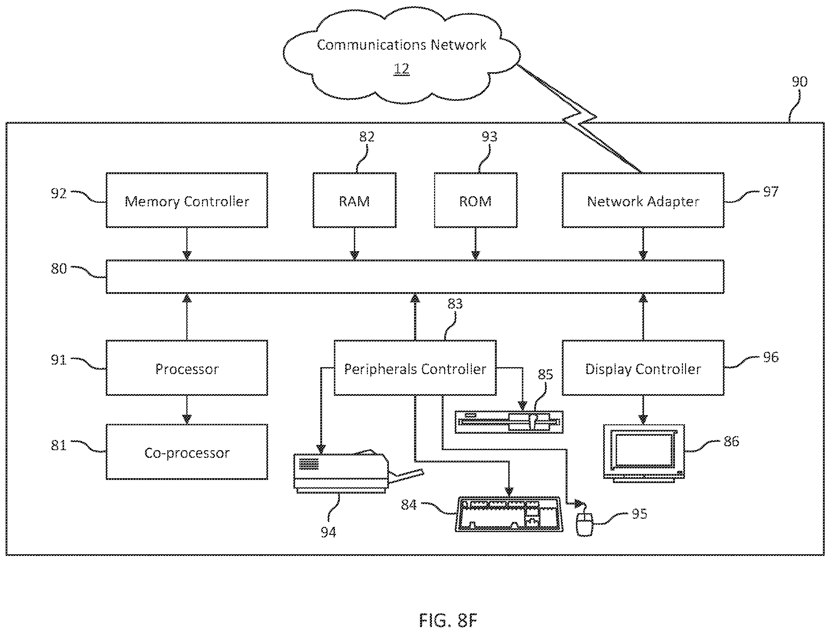

Figure 8F is a block diagram of an exemplary computing system 90 in which one or more apparatuses of the communications networks illustrated in Figures 8A, 8C, 8D and 8E may be embodied, such as certain nodes or functional entities in the RAN 103/104/105, Core Network 106/107/109, PSTN 108, Internet 110, or Other Networks 112. Computing system 90 may comprise a computer or server and may be controlled primarily by computer readable instructions, which may be in the form of software, wherever, or by whatever means such software is stored or accessed. Such computer readable instructions may be executed within a processor 91, to cause computing system 90 to do work. The processor 91 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 91 may perform signal coding, data processing, power control, input/output processing, and/or any other functionality that enables the computing system 90 to operate in a communications network. Coprocessor 81 is an optional processor, distinct from main processor 91, that may perform additional functions or assist processor 91. Processor 91 and/or coprocessor 81 may receive, generate, and process data related to the methods and apparatuses disclosed herein.

In operation, processor 91 fetches, decodes, and executes instructions, and transfers information to and from other resources via the computing system's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally contain stored data that may not easily be modified. Data stored in RAM 82 may be read or changed by processor 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it may not access memory within another process's virtual address space unless memory sharing between the processes has been set up.

In addition, computing system 90 may contain peripherals controller 83 responsible for communicating instructions from processor 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. The visual output may be provided in the form of a graphical user interface (GUI). Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain communication circuitry, such as for example a network adapter 97, that may be used to connect computing system 90 to an external communications network, such as the RAN 103/104/105, Core Network 106/107/109, PSTN 108, Internet 110, or Other Networks 112 of Figures 8A, 8B, 8C, 8D, and 8E, to enable the computing system 90 to communicate with other nodes or functional entities of those networks. The communication circuitry, alone or in combination with the processor 91, may be used to perform the transmitting and receiving steps of certain apparatuses, nodes, or functional entities described herein.

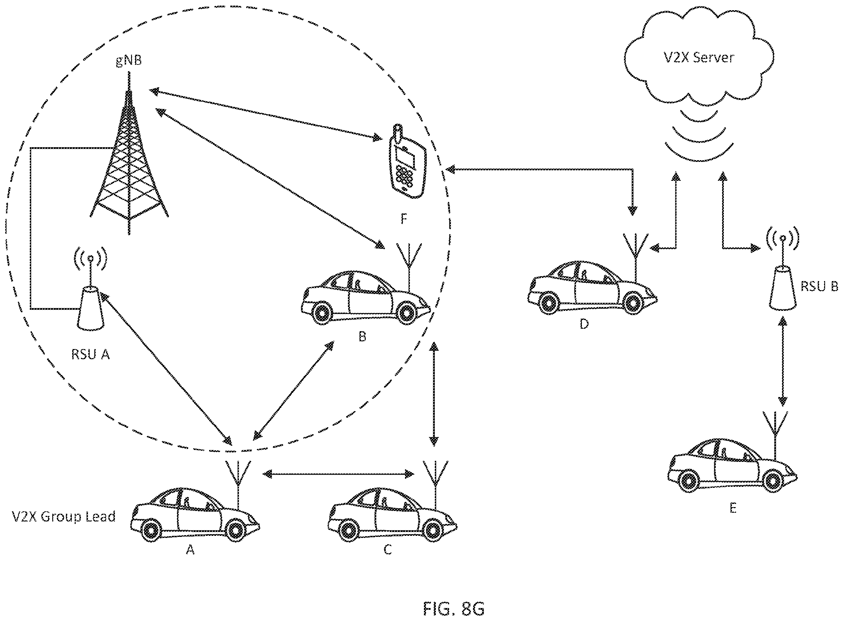

Figure 8G illustrates an example communications system 111 in which the methods and apparatuses described and claimed herein may be an aspect of. As shown, the example communications system 111 may include wireless transmit/receive units (WTRUs) A, B, C, D, E, F, a base station, a V2X server, and a RSUs A and B, though it will be appreciated that the disclosure contemplates any number of WTRUs, base stations, networks, and/or network elements. One or several or all WTRUs A, B, C, D, E may be out of range of the network (for example, in the figure out of the cell coverage boundary shown as the dash line). WTRUs A, B, C form a V2X group, among which WTRU A is the group lead and WTRUs B and C are group members. WTRUs A, B, C, D, E, F may communicate over Uu interface or Sidelink (PC5) interface.

It is understood that any or all of the apparatuses, systems, methods and processes described herein may be embodied in the form of computer executable instructions (e.g., program code) stored on a computer-readable storage medium which instructions, when executed by a processor, such as processors 118 or 91, cause the processor to perform and/or implement the systems, methods and processes described herein. Specifically, any of the steps, operations or functions described herein may be implemented in the form of such computer executable instructions, executing on the processor of an apparatus or computing system configured for wireless and/or wired network communications. Computer readable storage media include volatile and nonvolatile, removable and non-removable media implemented in any non-transitory (e.g., tangible or physical) method or technology for storage of information, but such computer readable storage media do not include signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which may be used to store the desired information and which may be accessed by a computing system.

### Definitions

Provided below are definitions for abbreviations found within the body of the disclosure.

| | |
|---|---|
| 3GPP | 3^{rd} Generation Partnership Program |
| 5GC | 5G Core Network |
| ACR | Application Context Relocation |
| ADAE | Application Data Analytics Enablement |
| ADRF | Analytical Data Repository Function |
| AF | Application Function |
| CAPIF | Common API Framework |
| DCCF | Data Collection Coordination Function |
| DCES | Data Collection Enablement Service |
| EAS | Edge Application Server |
| ECS | Edge Configuration Server |
| EDN | Edge Data Network |
| EEC | Edge Enabler Client |
| EES | Edge Enabler Server |
| NRF | Network Repository Function |
| NSCALE | Network Slice Capability Exposure for Application Layer Enablement Service |
| NWDAF | Network Data Analytics Function |
| OAM | Operations, Administration, and Management |
| QoS | Quality of Service |
| SEAL | Service Enabler Architecture Layer |
| SEALDD | SEAL Data Delivery Enabler for Vertical Applications |
| UAS | Uncrewed Aerial Systems |
| UE | User Equipment |
| VAL | Vertical Application Layer |
| V2X | Vehicle-to-Everything |

Example(s) of the present technology are defined by the following numbered clauses:
1. A method performed by a data collection enablement service (DCES) comprising:
   receiving data producer profiles of one or more data producers, wherein the data producer profiles comprise information associated with data generation or production capability of the one or more data producers;
   receiving a first message indicating a request for data collection, wherein the message comprises one or more requirements associated with the data collection;
   determining one or more data producers for the data collection based at least on the received data producer profiles and the one or more requirements in the first message;
   collecting data from the determined one or more data producers;
   processing the collected data based on the one or more requirements in the first message, thereby generating a dataset comprising the processed data; and
   storing the generated dataset in a repository in communication with the DCES.
2. The method of clause 1, wherein the DCES provides the data collection service in a cellular/3GPP network.
3. The method of clause 1, wherein the data collection service resides in a 3GPP service layer.
4. The method of clause 1, wherein the data collection service comprises a data analytics service.
5. The method of clause 1, wherein the data producer profiles are received via a discovery procedure.
6. The method of clause 1, wherein the data producer profiles further comprise data freshness information of the data provided by a respective data producer.
7. The method of clause 1, wherein the data producer profiles further comprise a data generation/collection rate or a data collection schedule supported by a respective data producer.
8. The method of clause 1, wherein the first message comprises a data analytics request.
9. The method of clause 1, wherein the one or more requirements in the first message comprise filter criteria of data producers.
10. The method of clause 1, wherein the one or more data producers comprise a service layer entity.
11. The method of clause 1, wherein the one or more data producers comprise a 3GPP service layer entity.
12. The method of clause 1, wherein the one or more data producers comprise an edge enabler layer entity.
13. The method of clause 1, wherein the one or more data producers comprise a data repository entity.
14. The method of clause 1, further comprising:
   examining previously generated datasets to identify a dataset that satisfy the one or more requirements in the first message.
15. The method of clause 1, wherein the processing of data comprises correlating data from multiple data producers, wherein the data from multiple data producers is of a same type with different data granularities.
16. The method of clause 1, wherein the processing of data further comprises combining or aggregating data from multiple data producers.
17. The method of clause 1, wherein the processing of data comprises modifying or tailoring data from a previously generated dataset to satisfy the one or more requirements in the first message.
18. The method of clause 1, further comprising transmitting a second message in response to the first message, wherein the second message comprises an identifier of the repository storing the generated dataset.
19. The method of clause 1, further comprising maintaining the information associated with the generated dataset.

## Claims

1. A method performed by a data collection enablement service, the method comprising:
receiving a request specifying one or more requirements associated with data;
obtaining profile information associated with a plurality of candidate data sources, wherein the profile information is indicative of data that a respective candidate data source is capable of providing;
determining one or more data sources from the plurality of candidate data sources based on the one or more requirements and the profile information;
obtaining data from the determined one or more data sources;
processing the obtained data according to the one or more requirements, thereby generating a dataset; and
storing the dataset in a repository.

2. The method of claim 1, wherein obtaining the profile information comprises obtaining the profile information from an entity maintaining profile information associated with candidate data sources.

3. The method of claim 1 or 2, wherein determining the one or more data sources is based on supported data indicated by the profile information.

4. The method of any preceding claim, wherein determining the one or more data sources is based on one or more of data freshness, location, data processing capability, data collection capability or real-timeliness associated with candidate data sources.

5. The method of any preceding claim, wherein obtaining the data comprises obtaining data from a plurality of data sources.

6. The method of any preceding claim, wherein obtaining the data comprises transmitting a subscription request and receiving notifications from at least one determined data source.

7. The method of any preceding claim, further comprising identifying an existing dataset that partially satisfies the one or more requirements associated with the data.

8. The method of claim 7, further comprising obtaining additional data for one or more requirements not satisfied by the existing dataset.

9. The method of claim 8, wherein processing the obtained data comprises combining the additional data with data of the existing dataset.

10. The method of any preceding claim, wherein processing the obtained data comprises normalising the data or converting the data into a different format or granularity.

11. The method of any preceding claim, wherein storing the dataset comprises creating a new dataset or updating an existing dataset.

12. The method of any preceding claim, wherein a property of the dataset is described by a respective dataset profile.

13. The method of any preceding claim, further comprising transmitting, in response to the request, a response comprising an address of the dataset in the repository.

14. The method of any preceding claim, wherein the data collection enablement service is deployed centrally, at an edge location, or in a distributed arrangement comprising central and edge components.

15. An apparatus for implementing a data collection enablement service, the apparatus comprising circuitry configured to:
receive a request specifying one or more requirements associated with data;
obtain profile information associated with a plurality of candidate data sources, wherein the profile information is indicative of data that a respective candidate data source is capable of providing;
determine one or more data sources from the plurality of candidate data sources based on the one or more requirements and the profile information;
obtain data from the determined one or more data sources;
process the obtained data according to the one or more requirements, thereby generating a dataset; and
store the dataset in a repository.
